(19) Europäisches Patentamt
European Patent Office
Office européen des brevets

(11) Publication number: 0 415 606 A2

# (12) EUROPEAN PATENT APPLICATION

(21) Application number: 90309029.8

(22) Date of filing: 17.08.90

(51) Int. Cl.5: C08F 291/00, C09D 151/00

(30) Priority: 24.08.89 JP 219166/89

(43) Date of publication of application:
06.03.91 Bulletin 91/10

(84) Designated Contracting States:
DE FR GB

(71) Applicant: NIPPON PAINT CO., LTD.
2-1-2, Oyodokita Kita-ku
Osaka-shi Osaka-fu(JP)

(72) Inventor: Ishii, Keizou
1-19, Shimizu-cho
Ashiya-shi, Hyogo-ken(JP)
Inventor: Kojima, Akihiro
2-5-8, Shikanodaihigashi
Ikoma-shi, Nara-ken(JP)
Inventor: Ishikura, Shinichi
60-35, Takigihata, Tanabe-cho
Tsuzuki-gun, Kyoto-fu(JP)

(74) Representative: Perry, Robert Edward et al
GILL JENNINGS & EVERY 53-64 Chancery
Lane
London WC2A 1HN(GB)

## (54) Polymer microparticle and coating composition containing the same.

(57) Polymer microparticles are obtainable by copolymerisation of two or more monomers each having one or more $\alpha,\beta$-ethylenically-unsaturated bonds in the presence of a resin having one or more groups of the formula -N(RY)- wherein R is an optionally-substituted phenylene or $C_{1-6}$ alkylene group, and Y is -COOH or $-SO_3H$. The microparticles have a sedimentation ratio of not more than 50% by weight when one part by weight thereof is agitated with 100 parts by weight of a solvent consisting of 50 to 100% by weight xylene and 50 to 0% by weight butyl alcohol at 20° C for 30 minutes, and then centrifuged at 17,000 rpm at 20° C for 30 minutes.

EP 0 415 606 A2

# POLYMER MICROPARTICLE AND COATING COMPOSITION CONTAINING THE SAME

## FIELD OF THE INVENTION

The present invention relates to a polymer microparticle and a coating composition containing the same, which is particularly useful as a decorative coating for automobile bodies and other articles.

## BACKGROUND OF THE INVENTION

Recently, a high solid coating composition comprising crosslinked polymeric microparticles has been watched with keen interest in various coating areas, and especially in an automobile industry, because of the eminent workability in spite of its high solid composition and capability of resulting a coating with excellent film performance. A dispersion of said microparticle in a solvent or a carrying vehicle is sometimes called as "microgels".

There have been various kinds of microgels proposed, for instance, polymer microparticles which are insolbuble in a solution of a film-forming polymer and are stably dispersed therein in a non-flocculated state by means of a steric barrier around the particles of polymer chains which are solvated by the said solution, and a coating composition containing the same in Japanese Patent Publication No. 61-26594 (U.S.P. 4,220,679); face coating compositions containing polymer microparticles obtained by polymerization of monomers having an ethylenically unsaturated bond in a solution of resins having a group of

$$\underset{|}{\phantom{N}}\!\!\!\!-N-R-Y$$

wherein R represents $C_1$ - $C_6$ alkylene or phenylene, and Y represents $-COOH$ or $-SO_3H$ in Japanese Patent Application KOKAI Nos. 57-187302, 58-129066, 58-129069, 58-129065, 60-94175, and 62-79873. These polymer microparticles are remarkably improved in the stability in the coating composition in comparison with those of Jap. Pat. Publn. No. 61-26594, and there is no problem in the compatibility with a diluent of the coating composition because these polymer microparticles contain no emulsifier. But it has been desired to improve the both of sagging property and appearance at the same time even when a high solid coating composition is applied.

As a high solid coating composition contains a less solvent, the viscosity must be reduced by combining a vehicle resin of a lower molecular weight into the composition, as the result of which the surface coated by them tends to cause sagging. The object of the addition of the polymer microparticles is to prevent such a deterioration of the sagging property, but it tends to spoil the appearance, especially brightness of the coated layer.

## SUMMARY OF THE INVENTION

An object of the present invention is, therefore, to provide polymer microparticles capable of providing a high solid coating composition improved in sagging properties, and prevented from spoiling the appearance even in the use of less volatile solvent.

The present invention, thus provides polymer microparticles which are obtainable from the copolymerization of two or more kinds of monomers having one or more $\alpha,\beta$-ethylenically unsaturated bonds in the presence of resins (I) having one or more groups represented by a formula

$$\underset{|}{\phantom{N}}\!\!\!\!-N-R-Y$$

wherein R is a phenylene group or a $C_1$ - $C_6$ alkylene group which may have one or more substituents, and Y is $-COOH$ or $-SO_3H$; the said polymer microparticles have a sedimentation ratio of not more than 50 % by

weight when one part by weight of said polymer microparticles is agitated with xylene or a mixed solvent of xylene butyl alcohol 100 parts by weight at at least one ratio of the xylene/butyl alcohol mixing ratio of from 100/0 - 50/50 by weight at 20 °C for 30 minutes, and then centrifuged at 17000 r.p.m. at 20 °C for 30 minutes, and provides a high solid coating composition containing thereof.

## DETAILED DESCRIPTION OF THE INVENTION

The present invention relates to a polymer microparticle which is obtainable by the copolymerization of two or more kinds of monomers having one or more $\alpha,\beta$-ethylenically unsaturated bonds in the presence of resins (I) having one or more group represented by a formula

$$\underset{|}{\phantom{N}}\!\!\!\!-N-R-Y$$

wherein R is a phenylene group or a $C_1$ - $C_6$ alkylene group which may have one or more substituents, and Y is -COOH or $-SO_3H$; the said polymer microparticle has a sedimentation ratio of not more than 50 % by weight when one part by weight of said polymer microparticle is agitated with xylene or a mixed solvent of xylene butyl alcohol 100 parts by weight at at least one ratio of the xylene/butyl alcohol mixing ratio of from 100/0 - 50/50 by weight at 20 °C for 30 minutes, and then centrifuged at 17000 r.p.m. at 20 °C for 30 minutes;

The second object of the present invention is to provide a process for production of the above polymer microparticles;

The third object of the present invention is to provides a coating composition containing the aforementioned polymer microparticle; and

The forth object of the present invention is to provide a coating method using the coating composition as described in the above.

The feature of the present invention is in that the sedimentation ratio of the polymer microparticle is not more than 50 % by weight when it is determined as aforementioned, and preferably less than about 30 % by weight, more preferably less than about 25 % by weight, particularly less than about 15 % by weight. Conventional polymer microparticles which have been used for this purpose have a sedimentation ratio of about more than 90 % by weight when they are determined according to the above method. It has been found that the sagging properties can be improved, and the brightness can be retained in the level as attained without using such polymer microparticles improved in the dispersability in xylene or the aforementioned xylene/butyl alcohol mixed solvent by reducing the sedimentation ratio.

In the present specification the solvent to be used for the determination of the sedimentation ratio is referred to xylene or the mixed solvent because the xylene or the mixed solvent is a typical solvent for a coating composition and the results obtained from the xylene or the mined solvent is universally applicable to any other coating composition using other solvent than the xylene or the mixed solvent. The similar results can be observed when tetrahydrofuran is used as a solvent for the same experiment.

It is not clear why both of the sagging properties can be improved without falling the brightness using such polymer microparticles having such a lower sedimentation ratio. Probably, the particle surface constitutes a suitable structure for the dispersion of the microparticle, and it contributes to stable dispersion in an actual coating composition and affinity to a diluent or a vehicle resin. Further, it is supposed that the sagging property is improved by the structural viscosity formed in association of the particle, and the appearance does not become worse due to the superior fine soluble particles.

In order to obtain polymer microparticles having a lower sedimentation ratio, both of an ionic polymerization initiator and a nonionic polymerization initiator are used together. The amount of a residual ionic group decreases on the surface of the polymer microparticles formed using the both, and the diameter of the microparticles becomes smaller than those formed using a single polymerization initiator in average. And the comparatively large particles and too fine particles decrease, so the distribution of the microparticle becomes even in the size. It is considered that these give good results in the sagging properties and brightness.

As the $\alpha,\beta$-ethylenically unsaturated monomer which can form polymer microparticles of the present invention includes any of the known monomers of functionality at least two. Preferable group members are the so-called polyfunctional monomers having two or more ethylenical unsaturations in its molecule such as polymerizable unsaturated monocarboxylic esters of polyhydric alcohol, polymerizable unsaturated alcoholic

esters of polycarboxylic acid and aromatic compounds substituted with more than 2 vinyl groups. Examples of such members are ethylene glycol diacrylate, ethylene glycol dimethacrylate, triethylene glycol dimethacrylate, tetraethylene glycol dimethacrylate, 1,3-butylene glycol dimethacrylate, trimethylolpropane triacrylate, trimethylolpropane trimethacrylate, 1,4-butanediol diacrylate, neopentyl glycol diacrylate, 1,6-hexanediol diacrylate, pentaerythritol diacrylate, pentaerythritol triacrylate, pentaerythritol tetra acrylate, pentaerythritol dimethacrylate, pentaerythritol trimethacrylate, penta erythritol tetramethacrylate, glycerol diacrylate, glycerol dimethacrylate, glycerol allyloxy dimethacrylate, 1,1,1-tris-hydroxymethylethane triacrylate, 1,1,1-tris-hydroxymethylethane dimethacrylate, 1,1,1-tris-hydroxy methylethane trimethacrylate, 1,1,1-tris-hydroxymethylpropane diacrylate, 1,1,1-tris-hydroxymethylpropane triacrylate, 1,1,1-tris-hydroxymethylpropane dimethacrylate, 1,1,1-tris-hydroxymethyl propane trimethacrylate, triallyl cyanurate, triallyl isocyanurate, triallyl trimellitate, diallyl terephthalate, diallyl phthalate and divinyl benzene.

Crosslinking monomers may also be of the combination of two ethylenically unsaturated monomers each bearing mutually reactive functional group as, for example, the combination of epoxy bearing ethylenically unsaturated monomers, such as glycidyl acrylate and glycidyl methacrylate, and carboxyl bearing ethylenically unsaturated monomers, such as acrylic acid, methacrylic acid and crotonic acid. Other examples of combination of mutually reactive functional groups are amine and carbonyl, epoxide and acid anhydride, amine and acid chloride, alkyleneimine and carbonyl, organoalkoxysilane and carboxyl, hydroxyl and isocyanate, and the like.

In the present invention there may be optionally used (b) a monomer having one polymerizable group such as an $\alpha,\beta$-ethylenically unsaturated bond other than the aforementioned crosslinkable monomer (a) as a copolymeriable ingredient. Examples of these monomers include:

I) carboxyl group-containing monomers, for instance, acrylic acid, methacrylic acid, crotonic acid itaconic acid, maleic acid, fumaric acid and the like;

II) hydroxyl group-containing monomers, for instance, 2-hydroxyethyl acrylate, hydroxypropyl acrylate, 2-hydroxyethyl methacrylate, hydroxypropyl methacrylate, hydroxybutyl acrylate, hydroxybutyl methacrylate, allyl alcohol, methallyl alcohol and the like;

III) nitrogen-containing alkyl acrylates or methacrylate, for instance, dimethylaminoethyl acrylate, dimethylaminoethyl methacrylate and the like;

IV) polymerizable amides, for instance, acrylamide, methacrylamide and the like;

V) polymerizable nitrile, for instance, acrylonitrile, methacrylonitrile and the like,

VI) alkyl acrylate or methacrylate, for instance, methyl acrylate, methyl methacrylate, ethyl acrylate, ethylacrylate, n-butyl acrylate, n-butyl methacrylate, 2-ethylhexyl acrylate and the like,

VII) polymerizable aromatic monomers, for instance, styrene, $\alpha$-methylstyrene, vinylstyrene, t-butylstyrene and the like,

VIII) $\alpha$-olefins, for instance, ethylene, propylene and the like,

IX) vinyl monomers, for instance, vinyl acetate, vinyl propionates and the like,

X) dienes, for instance, butadiene, isoprene and the like.

These monomers can be used singly or plurally.

According to the present invention at least two kinds of the $\alpha,\beta$-ethylenically unsaturated monomers, which may include polyfunctional groups as aforementioned are copolymerized in an aqueous or organic medium in the presence of a resin having a formula of

$$-\overset{|}{N}-R-Y-$$

wherein R is a phenylene or a $C_1$ - $C_6$ alkylene which may have one or more substituents, and Y is -COOH or $-SO_3H$.

Examples of such resins are alkyd, polyester, modified epoxy, acrylic, melamine and polyether resins having the amphoteric group of the formula:

$$-\overset{|}{N}^{\oplus}-R-COO^{\ominus} \quad \text{or} \quad -\overset{|}{N}^{\oplus}-R-SO_3^{\ominus}$$

These resins can exhibit specific behaviors in regard to reactivity, surface activity, and electrochemical properties because of the presence of said amphoteric radical, and are very useful as emulsifier or stabilizing agent in that polymerization reaction. Alkyd resin and polyester resin are characterized by forming a series of ester chains using an essential components polycarboxylic acid and polyhydric alcohol.

Therefore, when a part of said polyhydric alcohol is replaced by, for example, a compound of the formula:

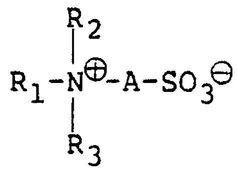

(I)

wherein $R_1$ represents an alkyl having at least one hydroxyl group, $R_2$ and $R_3$ are the same or different, each represents hydrogen or optionally substituted alkyl group, and A represents optionally substituted alkylene having 1 to 6 carbon atoms or phenylene group, it is possible to obtain alkyd or polyester resin having the abovesaid amphoteric group in its molecule. Reference may be made in this connection to Japanese Patent Applications of Nippon Paint Co., Ltd, Nos. 110865/79 and 56048/80 (Kokai Nos. 34725/81 and 51727/81), filed on Aug. 30, 1979 and Apr. 26, 1980, respectively.

Among these resins, the members having an acid vale of 30 to 150, and especially 40 to 150, and number average molecular weight of 500 to 5000, and especially 700 to 3000 are preferably used in this invention.

Modified epoxy resins having the characteristic amphoteric radical of the formula:

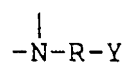

are stated, for example, in Japanese Patent Application of Nippon Paint Co., Ltd, No. 116293/80, filed on Aug. 22, 1980 (now laid open as Kokai No. 40522/82) In general, epoxy resin is characterized by having at the end of the polymer chain a group of the formula:

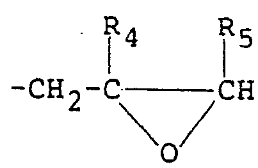

(II)

wherein $R_4$ and $R_5$ each represents hydrogen or methyl group. Therefore, it is possible to obtain a modified epoxy resin having at the end of polymer chain a quantity of such radical as

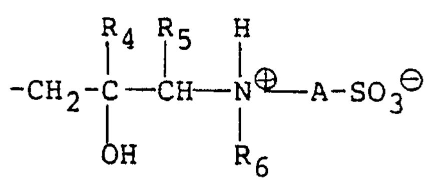

(IV)

by the reaction of said epoxy resin with a compound of the formula:

$R_6$-NH-A-$SO_3$M (III)

wherein $R_6$ is an alkyl group optionally substituted with a radical incapable of reacting with epoxy group, M stands for alkali metal or ammonium, and A has the same meaning as defined above. In proportion to the quantity of said amphoteric groups, the hydrophilic property of the modified epoxy resin will increase. Reference may be made in this connection to Japanese Patent Application of Nippon Paint Co., Ltd, No. 116293/80, filed on Aug. 22, 1980 (now laid open as Kokai No. 40522/82).

An acrylic resin having in its molecule a radical of the formula:

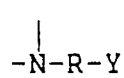

can be advantageously prepared by a solution polymerization using a free radical initiator from the combination of at least one polymerizable amino acid compound selected from

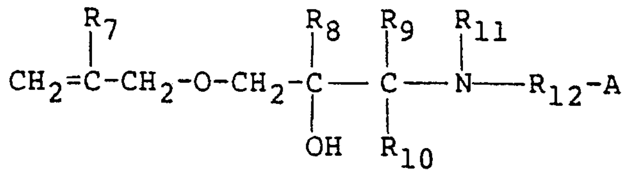

(V)

wherein $R_7$, $R_8$, $R_9$ and $R_{10}$ each represents a member selected from the group consisting of H, $CH_3$ and $C_2H_5$, $R_{11}$ is hydrogen or alkyl having 1 to 20 carbon atoms optionally including in its chain either one of -SO-, -COO- and -O-groups, $R_{12}$ represents alkylene group having 1 to 12 carbon atoms, optionally substituted with -OH, -SH, $-SR_{13}$ (in which $R_{13}$ is alkyl having 1 to 4 carbon atoms) or one or more of alkyl having 1 to 4 carbon atoms, and A represents COOH or $SO_3H$ group;

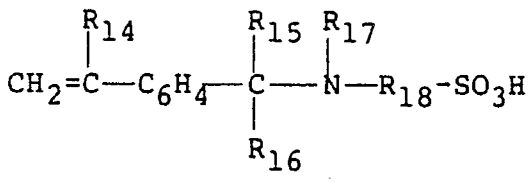

(VI)

wherein $R_{14}$, $R_{15}$ and $R_{16}$ each represents H or alkyl having 1 to 6 carbon atoms, $R_{17}$ represents hydrogen or alkyl having 1 to 20 carbon atoms, optionally including in its chain either one of -SO-, -COO- and -O-group, or $R_{17}$ represents a radical of the formula:

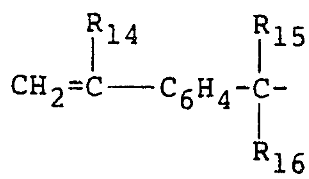

$R_{18}$ represents alkylene having 2 to 12 carbon atoms, optionally substituted with one or more of alkyl groups having 1 to 6 carbon atoms;

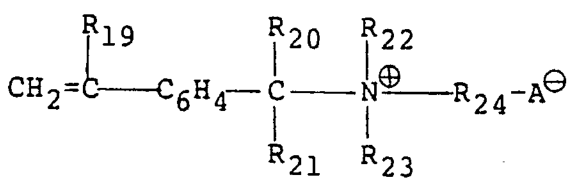

(VII)

wherein $R_{19}$, $R_{20}$ and $R_{21}$ are the same or different and each represents H or $CH_3$, $R_{22}$ represents $C_1$ - $C_{20}$ alkyl having at least one hydroxyl group and optionally containing in its alkyl structure a group of -O- or -COO-, $R_{23}$ represents $C_1$ -$C_{20}$ alkyl having at least one hydroxyl group and optionally containing in its alkyl structure a group of -O- or -COO-, or H or $C_1$ - $C_{20}$ alkyl, $R_{24}$ represents optionally substituted $(CH_2)_\eta$ (in which $\eta$ is an integer of from 1 to 6), and A is COO or $SO_3$; and

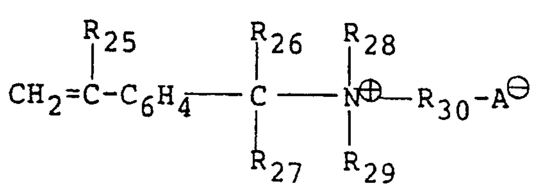

(VIII)

wherein $R_{25}$, $R_{26}$ and $R_{27}$ are the same or different and each represents H or $CH_3$, $R_{28}$ and $R_{29}$ are the same or different and each represents $C_1$ - $C_{20}$ alkyl optionally containing -O-or -COO-, or cycloalkyl group, or $R_{28}$ and $R_{29}$ taken together may form a hetero ring containing nitrogen atom, $R_{30}$ represents optionally substituted $(CH_2)_\eta$ alkylene in which $\eta$ is an integer of from 1 to 6, and A is COO or $SO_3$, and at least one polymerizable monomer selected from hydroxy bearing monomers, carboxyl bearing monomers, glycidyl bearing monomers, alkyl acrylates or methacrylates, N-containing alkyl acrylates or methacrylates, polymerizable amides, polymerizable nitriles, polymerizable aromatic compounds, α-olefins, vinyl compounds and diene compounds already stated hereinbefore. As to the details of these polymerizable amino acid compounds, reference should be made to Japanese Patent Applications of Nippon Paint Co., Ltd. Nos. 123899/78 (Kokai No. 51050/80), 125996/78 (Kokai No. 53251/80), 47651/80 (Kokai No. 145249/81) and 47652/80 (Kokai No. 145250/81), and as to amphoteric ion radical bearing acrylic resin, to Japanese Patent application of Nippon Paint Co., Ltd, No. 71864/81 filed on May 12, 1981.

Preferably, these acrylic resins should have an acid value of 30 to 180, most preferably 40 to 160, and number average molecular weight of 500 to 10,000, and most preferably 700 to 6000.

Melamine resins having

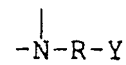

radical may be prepared by using at least one hydroxyl bearing aminosulfonic type amphoteric compound represented by the formula:

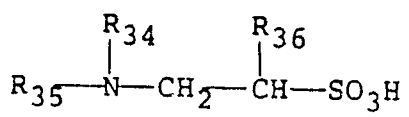 ,

(IX)

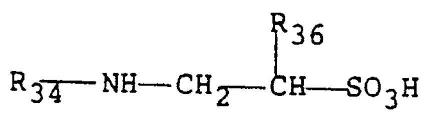

(X) or

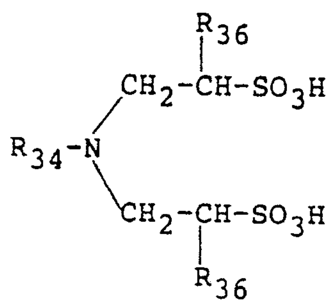

(XI)

wherein $R_{34}$ represents $C_1$ - $C_{20}$ hydroxyalkyl optionally containing in alkyl structure a group of -O- or -COO-, $R_{35}$ has the same meaning with $R_{34}$ or represents lower alkyl, and $R_{36}$ represents H or methyl group, together with melamine and formaline and following the conventional means. The reaction conditions and procedures used are not of a specific, nature and in this connection, reference should be made to, for example, "A guide of synthetic resins for coating composition" by K. Kitaoka, published on May 25, 1974, Kobunshi Kankokai, pages 134 to 139. The abovesaid hydroxy bearing aminosulfonic type amphoteric compounds are described in more minute detail in Japanese Patent Application by Nippon Paint Co., Ltd, No. 170624/79 (now laid open as Kokai No. 92859/81).

Polyether resins having

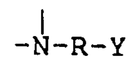

group may be prepared, as stated in Japanese Patent Application No. 116293/80 (Kokai No. 40522/82) filed on Aug. 22, 1980, by Nippon Paint Co., Ltd, by reacting a compound of the formula:

$R_{33}$-NH-A-$SO_3$M (XIII)

wherein $R_{33}$ is a substituent incapable of reacting with epoxy group, A represents an alkylene or phenylene, and M stands for alkali metal or ammonium group, to a polyether type epoxy resin having at the end of the polymeric chain a group of the formula:

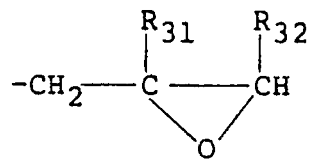

(XII)

wherein $R_{31}$ and $R_{32}$ each represents hydrogen or methyl group, thereby obtaining a modified polyether type epoxy resin having at the end of polymeric chain a group of the formula:

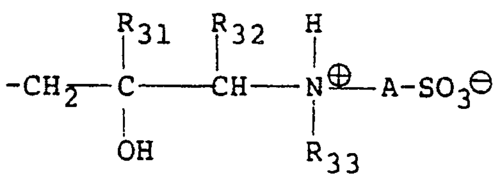

(XIV)

Any of the aforementioned resins have one or more specific amphoteric group of -N-R-Y in a molecule, and can be prepared either as water soluble type or as an organic solvent soluble type. When a water soluble type resin is prepared, it can function as an emulsifier or a dispersant for the emulsion polymerization of the $\alpha,\beta$-ethylenically unsaturated monores in an aqueous medium. Therefore, according to this process crosslinked polymer microparticles can be prepared without a conventional emulsifier.

The ratio of the monomers (a) and (b) for copolymer influences the emulsion stability and the properties of the coated layer. The monomer (a) is generally contained at least 0.01 % by weight based on the total weight of the monomers, more preferably more than about 0.1 % by weight, but it should not exceed 80 % by weight, and preferably less than about 60 % by weight. In case of the content of the monomer (a) is less than 0.01, desirable coating properties cannot be achieved, whereas too much use of the monomer (a) adversely affects the emulsion stability and coating properties.

Among the monomers (b) which are used with the monomer (a) a monomer classified from I) to V) as aforementioned is water soluble. Accordingly, if the content of the monomer belonging to the group I) to V) makes up too much in the monomer constitution, the durability of the coated layer obtained lowers. Therefore, the amount of the water soluble monomer (b) is preferably less than about 40 % by weight.

The amount of the aforementioned resin [I] is preferably from about 0.3 to about 60 % by weight based on the total weight of the monomers, more preferably from about 0.5 % to about 50 % by weight.

The water is preferably used in such an amount that the nonvolatile content in the obtained resin emulsion is from about 2 to 65 % by weight, more preferably from about 5 to 60 % by weight. The water may contain a water-miscible organic solvent.

A base is preferably used in the amount equivalent to or more than the acid value of the resin [I] so as to assure the solubilization of the resin [I]. As the base there are exemplified an alkaline metal hydroxide, ammonia, an organic amine and the like. Preferable one is ammonia or an organic amine because it does not remain an inorganic ion in a coated layer due to its volatilization.

The polymerization is carried out in the presence of a polymerization initiator. The feature of polymerization of the present invention is in the combination use of two kinds of polymerization initiator, one having an ionic group and the other having no ionic group, by which the sedimentation ratio of the polymer microparticle specified in the present invention can be kept at not more than 50 % even if the ratio of monomers (a) and (b) is controlled within the aforementioned range.

The polymerization initiator having an ionic group may be either cationic or anionic, but it is preferably soluble in water. There are exemplified organic azo compounds such as azobiscyanovaleric acid, bis(2-amidinopropane) hydrochloride and the like, and water- soluble inorganic radical initiators such as potassium peroxide, ammonium persulfate, sodium persulfate and the like.

The polymerization initiator having no ionic group includes, for example, organic peroxides such as benzoyl peroxide, t-butyl peroxide, cumen hydroperoxide, and the like, organic azo compounds such as azobisisobutylonitrile, azobis(2,4-dimethylvaleronitrile) and the like, and inorganic water-soluble radical initiator such as hydrogen peroxide and the like.

The ratio of the ionic polymerization initiator and the nonionic polymerization initiator is preferably about 50 - 99.5 : 50 - 0.5 by weight, more preferably 50 - 95 : 50 -5 by weight. Two or more kinds of initiator can be used in each group of the initiator.

The above two kinds of polymerization initiator according to the present invention may be previously mixed into a reaction medium or may be added together with the monomers. The polymerization initiators may be used in the amount of 0.05 - 5 % by weight based on the total amount of the monomer to be used, more preferably 0.1 - 3 % by weight.

A chain transferring agent such as lauryl mercaptan, hexyl mercaptan and the like may be used together with the initiators, if desired.

The polymerization may be carried out at a temperature of from 30 to 100 °C, more preferably 40 - 90 °C with stirring at 5 - 500 r.p.m., more preferably 10 - 300 r.p.m., which may be controlled according to a desired particle size.

By the adoption of said emulsion polymerization technique, a stably dispersed, milky or creamy resinous emulsion can be obtained, the average diameter of contained microparticles being in the range of from 0.01 to 0.5 $\mu$. When removing water from the emulsion by spray drying, solvent replacement, azeotropic distillation, centrifugal separation, filtering, drying and other appropriate means, a somewhat cohered polymeric mass having an average diameter of 0.01 $\mu$m and a maximum average diameter of about 40 $\mu$ can be obtained, which, however, is never a fused mass. Such product may be used directly or after being pulverized as the microparticles in the present high solid coating composition. For the purpose of drying said emulsion, a spray drying is most preferred because of the ease of operation and the particle diameter obtainable therewith.

Alternatively, the polymeric microparticles used in the invention may be prepared in a non-aqueous organic solvent by the so-called NAD method using the resin having an amphoteric radical as dispersion stabilizing agent. In that method, there is used a low polarity organic solvent that can be dissolved the monomers but not the polymer, like aliphatic hydrocarbons as exemplified by hexane, heptane and octane.

As previously mentioned, the amphoteric type resins used in the invention may be of the organic solvent soluble type and for the reasons of specific surface activity and electrochemical properties possessed, they are useful as effective dispersing and stabilizing agents in such circumstances. The reaction initiator to be used, operational details and after treatment in regard to NAD method are well known in the art and hence no particular mention would be required thereon. It will be sufficient to say that even in NAD method, the polymeric particles having an average diameter of 1 to 40 $\mu$ can be obtained.

The polymer microparticles of the present invention can be prepared by not only emulsion polymerization or NAD method but also suspension polymerization or bulk polymerization which is easily operable, because a resin having an amphoteric group is used as an emulsifier or a suspending agent.

Feature of the polymer microparticles of the present invention is to exhibit solubility to a solution of a coating layer formable polymer in a diluent different from a conventional polymer microparticle as aforementioned. The solubility is depended on the film formable polymer and the diluent to be used, but in the present invention the following evaluation is adopted as the standard:

The polymer microparticles one part by weight is agitated in with xylene or a mixed solvent of xylene butyl alcohol 100 parts by weight at at least one ratio of the xylene/butyl alcohol mixing ratio of from 100/0 - 50/50 by weight at 20 °C for 30 minutes, the obtained dispersion is centrifuged under 17000 r.p.m. at 20 °C for 30 minutes, the upper clear solution is removed by decantation, and then the sediment polymer microparticle was dried at 150 °C for 30 minutes, and the percentage by weight of the dried polymer microparticle to the initial polymer microparticle is referred to as a sedimentation ratio.

According to the present invention the sedimentation ratio is less than about 50 % by weight, preferably about less than 30 % by weight, more preferably about less than 25 % by weight, and most preferably less than about 15 % by weight.

The diluent to be used in the present invention should be selected according to the kind of coatings, but specific one is seldomly used at the present. Therefore, the above evaluation using xylene or a mixed solvent of xylene/butyl alcohol is applicable to properly estimate the applicability of the microparticle to every coating composition.

The polymer microparticle of the present invention has many uses, for instance, for coatings, especially high solid coating composition and the like. When they are used for a coating composition, the sagging property is remarkably improved without loss of brightness in comparison with conventional microparticles.

The coating composition according to the present invention may contain a film formable polymer (A) having a functional group reactive with a crosslinking agent, an organic volatile diluent (B) carrying said polymer, and a crosslinking agent (D) dissolved in the diluent in addition to the above polymer microparticles.

According to a preferable embodiment of the present invention the coating composition contains a film formable polymer (A) and a crosslinked polymer microparticles (C) in the ratio of 50 - 99.5 to 50 - 0.5 parts by weight, and a crosslinking agent (D) in the amount of 5 - 100 parts by weight based on 100 parts by weight of the sum of (A) and (C), and an organic diluent (B) in the amount of 10 - 2000 parts by weight based on 100 parts by weight of the sum of (A), (C) and (D).

The film formable polymer (A) having a functional group reactive with a crosslinking agent may be, for instance, an acryl resin, an alkyd resin, an polyester resin having an optional functional group such as hydroxyl group, carboxyl group and the like, which usually have an acid value of from 0.5 to 60, more preferably from 5 to 30; a hydroxyl value of from 20 to 200, more preferably from 60 -200; and a average number of molecular weight of from 500 to 50000, more preferably from 700 to 10000. It is especially preferable to use a film formable polymer having the molecular weight of about 700 to 6000 in case of the production of the aforementioned high solid coatings.

The polyester resin usable as a film formable crosslinkable resin may include any condensation product essentially consisting of polyols and polycarboxylic acids, which has been known as an ingredient for a coating composition to those skilled in the art. The polyester resin according to the present invention includes alkyd resins which may be produced by adding to the above condensation products components providing a fatty acid residue as derived from a natural drying oil, a semi-drying oil or an oil having no drying property. Further, the polyester resin includes those having no natural oil residue. These polyester resins contain a free hydroxyl group and/or a carboxyl group in such an amount that it can be utilized for the reaction with the conventional crosslinking agent.

The polyols suitable for the production of the polyester resin of the present invention includes, for example, ethylene glycol, propylene glycol, butylene glycol, 1,6-hexylene glycol, neopentylene glycol, glycerol, trimethylolpropane, trimethylolethane, pentaerythritol, dipentaerythritol, tripentaerythritol, hexanetriol, an oligomer of styrene and allyl alcohol (for example, HJ 100 available from Monsanto Chemical Company), a condensation product of trimethylolpropane and ethylene oxide or propylene oxide (for example, triols which is commercially known as Niax).

As a suitable polycarboxylic acid there are exemplified succinic acid including anhydride, adipic acid, azelaic acid, sebacic acid, maleic acid including anhydride, fumaric acid, mucic acid, itaconic acid, phthalic acid including anhydride, isophthalic acid, terephthalic acid, trimellitic acid including anhydride, pyromellitic acid including anhydride and the like. As a polycarboxylic acid derived from a fat or an oil there are exemplified fatty acids from linseed oil, soybean oil, tall oil, dehydrated castor oil, fish oil, tung oil, safflower oil, sunflower oil, cottonseed oil and the like. The oil length of the alkyd resin is preferably less than 50 % in general. Alternatively, monofunctional saturated carboxylic acids may be partially used in order to give a plasticity to the polyester. As the example of such acids there are $C_4$ - $C_{20}$ saturated fatty acid, benzoic acid, p-tert-butyl benzoic acid, abietic acid and the like.

The acrylic acid usable in the present invention may be an acrylic polymer which is conventionally used in a coating area, for instance, a homo or copolymer of at least one kind of esters of acryric acid or methacrylic acid, or sometimes another ethylenically unsaturated monomers and functional monomers.

Suitable acrylic esters according to the present invention includes methyl methacrylate, ethyl methacrylate, propyl methacrylate, ethyl acrylate, butyl acrylate, 2-ethylhexyl acrylate, and the like. Examples of another interest copolymerizable monomers include vinyl acetate, vinylpropyonate, acrylonitrile, styrene, toluene and the like. Suitable functional monomers include acrylic acid, methacrylic acid, hydroxyethyl acrylate, hydroxyethyl methacrylate, 2-hydroxypropyl acrylate, 2-hydroxypropyl methacrylate, N-alkoxymethyl methacrylate (as the alkoxy group butoxy group and the like may be exemplified), glycidyl acrylate, glycidyl methacrylate and the like.

When the coating composition of the present invention is applied to a clear top coat, the film formable resin is preferably a film formable acryl polymer. That is, such an acryl polymer preferably has both a hydroxyl group and a carboxyl group as crosslinkable groups, and an average number molecular weight of from 500 - 50000, a hydroxy value of 60 to 200, and an acid value of from 5 to 30.

These polymers may be used as combined with a crosslinking agent (D) in general in order to achieve or assist the curing. A suitable crosslinking agent is, for example, diisocyanates, diepoxides, aminoplast resins and the like, which may be used generally dissolved in a diluent for the polymer, and then reacted with a functional group of the film formable resin to form a three-dimensional cured coating layer during or after the coating. Preferable crosslinking agents are a condensation product of formaldehyde and a

nitrogen-containing compound such as urea, thiourea, melamine or benzoguanamine or a lower alkyl ether of the condensation product (the number of the carbon atom is 1 - 4). The most preferable crosslinking agent is a melamine-formaldehyde condensation product in which substantial amount of methylol group is etherified with an alcohol such as butanol or methanol.

The aforementioned film formable polymer can be dissolved or dispersed in the diluent (B), and alternatively, partially dissolved but partially dispersed therein. In such a case, a volatile organic solvent may be used. Typical examples of such a solvent are toluene, xylene, aromatic group-containing various kinds of petroleum distilled and the like; esters such as butyl acetate, ethylene glycol diacetate, 2-ethoxyethyl acetate and the like; ketones such as acetone, methyl isobutyl ketone and the like; alcohols such as butyl alcohol and the like; aliphatic hydrocarbons or mixture thereof; glycols such as ethylene glycol, diethylene glycol, propylene glycol and the like; glycol ethers such as butyl cellosolve and the like.

The coating composition may contain blocked organic acids as a crosslinking accelerator and pigments if necessary.

As a catalyst an acid such as dinonylnaphthalenedisulfonic acid, dodecylbenzenesulfonic acid, p-toluenesulfonic acid and the like is generally used, when polyester resins or acryl resins which have hydroxyl groups or carboxyl groups are crosslinked with a crosslinking agent such as an aminoplast.

In a more preferable process, an organic acid which is blocked with a basic compound may be used as a catalyst for the crosslinking reaction, by which a crosslinking degree sufficient to obtain firm cured coatings can be achieved even if a resin having a lower molecular weight and a comparatively lower reactivity wth the crosslinking agent is used. In addition, as the functional group is blocked with a base, harmful influence can be minimized such as lowering the stock stability of the coating composition, deteriolation of the coating layer in the quality due to remaining the acids and the like.

As the organic acid to be used for the above object one having a pKa value of 4.0 or less, for instance, p-toluenesulfonic acid, dodecylbenzenesulfonic acid, dinonylnaphthalenesulfonic acid, methanesulfonic acid and the like, and an organic sufonic acid is most preferable.

The organic acid as just aforementioned is preferably neutralized with a base by at least about 60 % equivalent. The base to be used for the neutralization includes preferably secondary amines or tertiary amines such as dimethylamine, diethylamine, piperidine, morpholine, diethanolamine, methylethanolamine, triethylamine, triethanolamine, diisopropanolamine, pyridine, di-2-ethylhexylamine, dicyclohexylamine, methylamine, dimethylcyclohexylamine, di(N-methyl-2,2,6,6-tetramethyl-4-piperidyl) sebacate and the like. The most preferable one is a strong basic amine having a high boiling point (higher than 150 °C) such as diisopropanolamine, dicyclohexylmethylamine and the like, by which excellent appearance can be achieved.

The organic acid and the base used for blocking the acid may be added after the salt was formed by the both, or separately added into the coating composition.

The coating composition may contain another additives, for instance, a viscosity controlling agent such as organic montmorillonite, cellulose acetate butylate and the like, a surface controlling agent such as silicones or organic polymers, U.V. absorbants, hindered amines, hindered phenols and the like.

The coating composition according to the present invention may be for a base coat, a top coat, a clear coat, a solid color, an intercoat, a metallic coat and the like.

The pigment used in the present invention may be any usual one in the coating area, which includes inorganic pigments such as titanium dioxide, iron oxide, chromium oxide, lead chromate, and carbon black; and organic pigments such as phthalocyanine blue, phthalocyanine green, carbazole violet, anthrapyrimidine yellow, flavanthrone yellow, isoindolinon yellow, indanthrone blue, quinacridone red, quinacridone violet, perylene red and the like. The term "pigment" in the present specification includes a pearl gloss pigment such as mica, colored mica, interference fringes mica, and the like; a conventional filler such as talc, kaolin; an extender and the like.

In the metallic color a metallic flake pigment may be contained in addition to the above pigments. Suitable metallic flake pigment includes aluminum powder, copper powder and the like.

The coating composition of the present invention can be prepared as a clear coat which does not contain any pigments.

The present invention further provides a coating method using the aforementioned coating composition.

A method of the present invention comprises:

forming a base coat using a composition essentially consisting of:

(a) a lower molecular film formable resin having one or more functional groups reactive with a crosslinking agent,

(b) a crosslinking agent,

(c) an organic liquid diluent,

(d) a polymer microparticle as aforementioned, and

(e) a pigment; applying onto the above base coat a clear top coat composition essentially consisting of:
(f) a lower molecular film formable acrylic polymer having one or more functional groups reactive with a crosslinking agent,
(g) a crosslinking agent,
(h) an organic liquid diluent, and
(i) a polymer microparticle as aforementioned, in the manner of wet-by-wet to give a top coat; and curing the both of the base coat and the clear top coat.

In the above process an organic acid blocked with a base may be added to the base coat composition or either or also to the clear top coat composition so as to accelerate the curing reaction.

The combination use of the lower molecular resins (a) and (g); the crosslinking agents (b) and (h); and the polymer microparticles (d) and (j) makes the coating composition high solid, especially the design for high solid coatings applicable to the EPA Regulation of U.S.A. as well as improves workability. Further, a high degree of crosslinking can be achieved sufficient to provide an excellent quality of coated layer using the organic acid catalysts blocked with a base (alkaline material) (e) and (k), as well as the stock stability of the coating composition can be ensured, because the organic acid is blocked at storage.

There has been illustrated in the explanation concerning the coating composition the film formable resin for a base coat (a), the film formable resin for a top coat (g), crosslinkaging agents (b) and (h), the organic diluents (c) and (i), the polymer particles (d) and (j), the organic acids (e) and (k) for accelerating the crosslinking reaction, the pigments and the other additives.

According to the coating method of the present invention it is the most preferable that a base coat layer is previously formed, and then a clear top coat is formed while the base coat layer keeps the wet condition, and the both layers are cured at the same time, so called, two- coat/one-bake system.

The ratio of the film formable resin and the crosslinking agent in the base coat and clear coat compositions is preferably from about 4 : 6 to about 8 : 2 by weight. If the amount of the crosslinking agent is less than the above, the strength of the layer after cured becomes insufficient, whereas being more than the above a hard and brittle coated layer is formed.

The amount of the polymer microparticle is preferably from about 0.2 to about 40 % by weight based on the sum of the crosslinkable resin and the crosslinking agent (both as a solid). If the amount of the microparticle is less than 0.2 % by weight, the rheology of the coating composition cannot be controlled by the addition thereof, which is a most important function, whereas in the excessive use the appearance of the coat obtained becomes worse.

The organic acid blocked with a base is preferably used within about 0.01 to about 3.0 % by weight based on the solid of coating composition except the pigment. If the amount of the acid is too less, the curing of the resin is insufficiently achieved, whereas in case of excessive use affect the appearance of the coating and the quality adversely without any increase of catalytic efficiency.

One of the feature of the present invention is to enable to provide a high solid coating composition. For instance, when the composition is coated by spraying, there can be provided a base coat having a solid content of 51 - 56 % by weight and a clear top coat of 59 - 65 % by weight. Therefore, the amount of the diluent (solvent) can be reduced in the present invention. The critical sag thickness of the coated layer is fairly thick, for instance, about 55 - 60 micrometers. The critical sag thickness means the critical thickness of the coat at which the sag does not give rise to when the coating composition is coated on a vertical substrate by a spray gun. The weather resistance of the hardened coated layer is similar to a conventional one.

According to the present invention the base coat composition is coated on the surface of the substrate which is previously under-coated or subjected to a conventional treatment. The substrate includes metals which are usually used in an industrial object, especially for automobile, such as iron, aluminum, copper and the like, and any other material such as ceramics, plastics and the like, which are durable to a final curing temperature of the multi-coated layer. The coated base coat is optionally held at an ambient temperature or heated, and a top clear coat is provided by wet-on-wet system. The obtained coat is optionally treated with setting or preheating, baked at a suitable temperature so that the both of base coat and the clear top coat are simultaneously cured. According to these processes a cured multi-layer coat having an excellent appearance can be formed.

The thickness of the base coat layer is preferably about 10 - 30 micrometer, and that of the top clear coat layer is preferably about 20 - 70 micrometer (both are the thickness of dried one).

The present invention is illustrated by means of Examples, in which the part and percent are by weight unless otherwise being specifically described.

Reference Example 1

Production of a polyester resin having both of one or more amphoteric groups and polymerizable α,β-unsaturated bonds:

Into a 2 liters flask fitted with a stirrer, nitrogen inlet pipe, thermoregulator, condenser and decanter were charged bishydroxyethyl taurine 213 parts, 2-ethyl-1,3-hexanediol 292 parts, phthalic anhydride 296 parts,, sebacic acid 404 parts and xylene 44 parts, and the mixture was heated, while removing the formed water azeotropically with xylene. The reaction temperature was raised to 210 °C in about 3 hours from the commencement of reflux and stirring and dehydration were continued until the acid value reached 125 based on the carboxylic acid. The reaction mixture was allowed to cool to 140 °C and while maintaining this temperature Cardura - E 10 (glycidyl versatate, manufactured by Shell Chem. Co.) 500 parts were added dropwisely in 30 minutes. After continuing stirring for 2 hours, the reaction was completed. The obtained polyester resin had an acid value of 58, and a number average molecular weight of 1250.

Reference Example 2

Preparation of a polyester resin having both of amphoteric group and polymerizable α,β-unsaturated bond:

Into a 2 liters flask equipped with a stirrer, nitrogen inlet pipe, thermoregulator, condenser and decanter were charged bishydroxyethyl taurine 213 parts, 2-ethyl-1,3-hexanediol 292 parts, phthalic acid anhydride 296 parts,, sebacic acid 404 parts and xylene 44 parts, and the mixture were heated, while removing the formed water azeotropically with xylene. The reaction temperature was raised to 210 °C in about 3 hours from the commencement of reflux and stirring and dehydration were continued until the acid value reached 125 based on the carboxylic acid. The reaction mixture was allowed to cool to 140 °C and while maintaining this temperature Aquamote 13 G (synthetic fatty acid glycidyl ester, manufactured by Idemitsu Sekiyu Kagaku K.K.) 600 parts were added dropwisely in 30 minutes. After continuing stirring for 2 hours, the reaction was completed. The obtained polyester resin had an acid value of 53, and number average molecular weight of 1330.

Reference Example

Preparation of film formable acryl resin varnish:

Into a flask equipped with a stirrer, a thermoregulator and a condenser were charged toluene 710 parts, and n-butanol 200 parts, into which a solution containing following ingredients 200 parts were added, and the mixture was heated with stirring:

| ingredients | parts |
|---|---|
| methacrylic acid | 12 |
| styrene | 264 |
| methyl methacrylate | 264 |
| n-butyl acrylate | 360 |
| 2-hydroxyethyl acrylate | 100 |
| azobisisobutyronitrile | 10 |

Into the mixture were dropwisely added the rest portion of the above solution 810 parts in 2 hours while the mixture was refluxed. After that the solution of azobisisobutyronitrile 3 parts in toluene 100 parts were added dropwisely in 30 minutes. The reaction solution was refluxed for additional 2 hours to increase the conversion ratio to the resin to give an acryl resin varnish having a solid of 50 %.

Reference Example 4

Preparation of film formable polyester resin varnish:

Into a reaction vessle equipped with a stirrer, a thermoregulator, and a decanter were charged following ingredients and the mixture was heated as stirring:

| ingredients | parts |
|---|---|
| ethylene glycol | 39 |
| neopentyl glycol | 130 |
| azelaic acid | 236 |
| phthalic anhydride | 186 |
| xylene | 30 |

The mixture was heated, while removing the formed water azeotropically with xylene until the acid value was reduced to 150. After that the reaction mixture was cooled to 140 °C, and then Cardura E-10 (epoxy resin available from Shell Chem. Co.) 314 parts was added and the reaction was continued for 2 hours as stirring. The obtained resin had an acid value of 9, a hydroxyl value of 90 and a number average molecular weight of 1050. This resin is diluted with xylene to give a polyester resin varnish having a solid of 60 % and Gardner viscosity of Y.

Example 1

(Preparation of Polymer Microparticle Liquid)

Into a reaction vessle equipped with a stirrer, a condenser, and a thermoregulator were charged a polyester resin of the Ref. Example 1 15 parts, dimethylethanolamine 1.5 parts, deionized water 88 parts, methylmethacrylate 4 parts, n-butyl acrylate 2 parts, and ethylene glycol dimethacrylate 4 parts, and the mixture was heated to 83 °C. Into the reaction mixture was added an initiator solution consisting of azobiscyanovaleric acid 0.3 part, 2,2′-azobis[2-methyl-N-(2-hydroxyethyl)-propyonamide] 0.2 part, dimethylethanolamine 0.13 part and deionized water 180 parts, and the mixture was reacted at 80 °C for 30 minutes. Into the reaction mixture was dropwisely added over one hour a monomer mixture of methyl methacrylate 36 parts, n-butyl acrylate 18 parts and ethylene glycol 36 parts, and the reaction solution was heated to 90 °C and reacted for 2 hours, and then cooled.

Xylene was added into the obtained emulsion, and water was azeotropically removed therefrom under reduced pressure to give a xylene solution of 30 % solid. The particle size of the obtained polymer microparticle was 68 nm. Xylene was added into the polymer microparticle solution in xylene to give a xylene solution of 1 % solid. When the 1 % solution was centrifuged at 17,000 rpm, 10 % precipitation based on the solid was settled (sedimentation ratio being 10 %) but others were completely dissolved.

Examples 2 - 4

The same method as in the Example 1 was repeated except that the ingredients shown in Table 1 were used to yield three kinds of polymer microparticle. The sedimentation ratio of each polymer microparticle was less than 10 %.

Table 1

| Ingredients | Ex. 2 | Ex. 3 | Ex. 4 |
|---|---|---|---|
| polyester resin of Ref. Ex. 1 | 15 | 15 | - |
| polyester resin of Ref. Ex. 2 | - | - | 15 |
| dimethylethanolamine | 1.5 | 1.5 | 1.5 |
| deionized water | 88 | 88 | 88 |
| methyl methacrylate | - | 3.5 | - |
| styrene | 4.0 | 1.5 | 4.0 |
| n-butyl acrylate | 2.0 | - | - |
| n-butyl methacrylate | - | 1.0 | 1.0 |
| ethylene glycol dimethacrylate | 4.0 | 4.0 | - |
| neopentyl glycol dimethacrylate | - | - | 5.0 |
| azobiscyanovaleric acid | 0.5 | 0.2 | 0.5 |
| 2,2′-azobis[2-methyl-N-(2-hydroxyethyl)-propyonamide] | 0.1 | 0.2 | 0.1 |
| dimethylethanolamine | 0.3 | 0.13 | 0.3 |
| deionized water | 180 | 180 | 180 |
| methyl methacrylate | - | 31.5 | - |
| styrene | 36.0 | 13.5 | 36.0 |
| n-butyl acrylate | 8.0 | - | - |
| n-butyl methacrylate | - | 9.0 | 9.0 |
| ethylene glycol dimethacrylate | 36.0 | 36.0 | - |
| neopentyl glycol dimethacrylate | - | - | 45.0 |
| particle size (nm) | 52 | 58 | 42 |
| sedimentation ratio of polymer microparticle | 6% | 8% | 5% |

Example 5

Into the same devise as the Example 1 there were charged polyester resin of the Ref. Example 2 8 parts, diethanolamine 0.8 parts, deionized water 88 parts, styrene 2 parts, ethyl acrylate 1 part, n-butyl acrylate 0.5 part, neopentyl glycol methacrylate 3 parts, and methyl methacrylate 3.5 parts, and the mixture was heated to 80 °C. Into the reaction mixture were added azobiscyanovaleric acid 0.3 part, dimethylethanolamine 0.13 part and deionized water 20 parts, and the mixture was reacted for 10 minutes. Into the reaction mixture was dropwisely added over one hour an emulsion mixture which was prepared by dispersing styrene 20 parts, 2-ethylhexyl methacrylate 28 parts, 2-hydroxyethyl methacrylate 2 parts, and a solution of azobisisobutyronitrile 0.2 parts in divinylbenzene 40 parts into an aqueous solution of the polyester resin of Ref. 2 3 parts and diethanolamine 0.3 part in deionized water 160 parts, and thus obtained mixture was additionally reacted for 2 hours, and then cooled.

The obtained emulsion was dried by freeze-drying to give a polymer microparticle. The microparticle was dissolved into n-butyl acetate, and then a diatomaceous earth added. The resultant was filtered through a filter paper under a pressure to obtain a polymer particle solution of 30 % solid. The particle size of the obtained microparticle was 58 nm, and the sedimentation ratio thereof is 23 % (in xylene) and 21 % (in xylene/butanol = 80/20).

Comparative Example 1

It was vigorously agitated the mixture of polyester resin of the Ref. Example 1 15 parts, dimethylethanolamine 1.5 parts, deionized water 107 parts, methylmethacrylate 40 parts, n-butyl acrylate 20 parts, and ethylene glycol dimethacrylate 40 parts to prepare a monomer emulsion. Deionized water 141 parts was charged into a reaction vessle, heated to 83 °C, into which there were simultaneously and dropwisely added over one hour both of an aqueous initiator solution consisting of azobiscyanovaleric acid 1.0 part and dimethylethanolamine 0.6 part in deionized water 20 parts and the monomer emulsion

previously prepared were simultaneously and dropwisely added over one hour, and the mixture was reacted at 83 °C for 2 hours.

Xylene was added into the obtained emulsion, from which water was azeotropically removed under reduced pressure to give a xylene solution of 30 % solid. The obtained polymer microparticle was 125 nm in the diameter, and the sedimentation ratio by the centrifuge was 72 % (in xylene), which meant the portion of solution was less than that of the polymer microparticle of the Examples 1 - 5.

Examples 6 and 7 and Comparative Examples 2 and 3

Coating compositions were prepared by blending the components as shown in Table 2 in a labo-blender.

Table 2

| | Example | | Comp. Ex. | |
|---|---|---|---|---|
| components | 6 | 7 | 2 | 3 |
| solution of polymer microparticle of Ex. 1 | 5 | - | - | - |
| solution of polymer microparticle of Ex. 2 | - | 5 | - | - |
| solution of polymer microparticle of Comp. Ex. 1 | - | - | 5 | - |
| acryl resin varnish of Ref. Ex. 3 | 500 | 500 | 500 | 500 |
| n-butanol modified melamine resin | 6 | 65 | 65 | 65 |

Each coating composition was diluted with a mixed solution of xylene / ethylene glycol monobutyl ether = 1 / 1 to adjust the viscosity to 25 seconds measured by Ford-Cup No. 4. After the each composition which was adjusted in the viscosity was coated by a spray gun on a vertical substrate as varying the thickness, the obtained each coat was hardened at 140 °C for 20 minutes, and the critical thickness of the coat at which the sag did not give rise to (referred to as a critical sag thickness herein), and the appearance of the each coat was evaluated. The results were shown in Table 3.

Table 3

| Example | critical sag thickness | Appearance |
|---|---|---|
| Example 6 | 65 µm | good |
| 7 | 57 µm | good |
| Comp. Ex. 2 | 59 µm | bad |
| 3 | 28 µm | good |

Example 8 and Comparative Example 4

According to a similar manner to the Example 6 two kinds of coating compositions were prepared. The formulation of each composition was as follows.

| ingredients | Ex. 8 | Comp. Ex. 4 |
|---|---|---|
| solution of polymer microparticle of Example 3 | 5 | - |
| aluminum past* | 13 | 13 |
| acryl resin varnish of Ref. Example 3 | 200 | 200 |

* a composition consisting of an aluminum flake 64 %, stearic acid 1 %, and mineral spirit 35 %.

Each composition was diluted with a mixed solvent of xylene / ethylene glycol monobutyl ether = 1 / 1 to adjust the viscosity to 40 seconds measured by Ford- Cup No.4. When applied by means of spray gun, the composition of Example 8 showed far better results in respect of pinhole, sagging properties, and control of metal pattern as compared with those of the Comparative Example 4.

Example 9

Alkyd resin varnish of Reference Example 4 100 parts and Rutile type titanium dioxide 90 parts were weighed in a dispersion vessel and stirred well by means of a paint conditioner to obtain a white colored paste. Using this paste and according to the following prescription, coating compositions were prepared.

| ingredients | Ex. 9 | Comp. Ex. 5 |
|---|---|---|
| solution of polymer microparticle of Example 5 | 7 | - |
| solution of polymer microparticle of Comp. Ex. 1 | - | 7 |
| white paste | 190 | 190 |
| trimer of hexamethylene diisocyanate | 5 | 5 |

Each composition was diluted with a thinner consisting of xylene / butyl acetate = 1 / 1 to adjust the viscosity of 25 seconds measured by Ford-Cup No.4, and each diluted composition was applied by a conventional spray coating and dried at 80 °C for 30 minutes to give a coat. The sagging properties of the both were good, but the appearance of the coat from the composition of Example 9 was far better than that from the Comparative Example 5.

## Claims

1. Polymer microparticles, obtainable by copolymerisation of two or more monomers each having one or more $\alpha,\beta$-ethylenically-unsaturated bonds in the presence of a resin having one or more groups of the formula -N(RY)- wherein R is an optionally-substituted phenylene or $C_{1-6}$ alkylene group, and Y is -COOH or $-SO_3H$; the microparticles having a sedimentation ratio of not more than 50% by weight when one part by weight thereof is agitated with 100 parts by weight of a solvent consisting of 50 to 100% by weight xylene and 50 to 0% by weight butyl alcohol at 20 °C for 30 minutes, and then centrifuged at 17,000 rpm at 20 °C for 30 minutes.

2. Polymer microparticles of claim 1, in which at least 15 one of the monomers has at least two radically-polymerisable groups per molecule.

3. Polymer microparticles of claim 1 or claim 2, in which at least one of the monomers is monofunctional.

4. Polymer microparticles of any preceding claim, in which at least one of the monomers has two mutually-reactive ethylenically-unsaturated groups.

5. Polymer microparticles of any preceding claim, in which the resin is selected from alkyd, polyester, modified epoxy, acrylic, melamine and polyether resins.

6. A process for the production of polymer microparticles of any preceding claim, which comprises polymerising the two or more monomers in the presence of the resin, a polymerisation initiator having an ionic group and a polymerisation initiator having no ionic group, in an aqueous medium,

7. A coating composition comprising:
(A) a film-forming polymer having one or more functional groups reactive with a cross-linking agent;
(B) an organic liquid diluent for the film-forming polymer;
(C) polymer microparticles of any of claims 1 to 5; and
(D) a cross-linking agent dissolved in the diluent.

8. A composition of claim 7, in which the diluent is selected from aliphatic hydrocarbons, aromatic hydrocarbons, esters, ketones, alcohols and mixtures thereof.

9. A composition of claim 7 or claim 8, in which the film-forming polymer is an alkyd or acrylic resin having one or more hydroxyl or carboxyl groups.

10. A coating method, which comprises forming a base coat using a composition of any of claims 7 to 9 together with a pigment; wet-on-wet applying to the base coat a clear top coat composition of claim 9 comprising a film-forming acrylic polymer; and curing both coats.